# EUROPÄISCHE PATENTSCHRIFT

(11) **EP 3 096 008 B1**
(45) Veröffentlichungstag und Bekanntmachung des Hinweises auf die Patenterteilung: **03.01.2018**
(21) Anmeldenummer: 16167894.1
(22) Anmeldetag: 02.05.2016
(51) Int. Cl.: F03D 80/40

(54) **VERFAHREN UND SYSTEM ZUR ROTORBLATTENTEISUNG SOWIE COMPUTERPROGRAMM UND WINDENERGIEANLAGE**
METHOD AND SYSTEM FOR ROTOR BLADE DE-ICING, AND COMPUTER PROGRAM AND WIND TURBINE
PROCEDE ET SYSTEME DE DISPOSITIF DE DEGIVRAGE DE PALE DE ROTOR ET PROGRAMME INFORMATIQUE ET EOLIENNE

(30) Priorität: 18.05.2015 DE 202015003529 U
(43) Veröffentlichungstag der Anmeldung: 23.11.2016
(73) Patentinhaber: Senvion GmbH, 22297 Hamburg (DE)
(72) Erfinder: KRAMER, Bertin, 49088 Osnabrück (DE); RZEPKA, Marek, 24848 Kropp (DE)
(74) Vertreter: Seemann & Partner Patentanwälte mbB

(56) Entgegenhaltungen:
- EP-A2- 1 788 239
- WO-A1-2013/107457
- DE-A1-102010 051 297
- US-A1- 2013 101 414

## Beschreibung

Die Erfindung betrifft ein Verfahren zum Enteisen eines Rotorblatts einer Windenergieanlage, wobei bei einem Eisbesatz in einem von Eis freizuhaltenden oder zu befreienden Bereich des Rotorblatts ein Enteisungsvorgang gestartet wird, in dem ein Luftstrom auf eine vorgegebene oder vorgebbare Vorlauftemperatur erwärmt und von einer Blattwurzel des Rotorblatts aus durch einen Kanal oder ein Kanalsystem im Rotorblatt in den von Eis freizuhaltenden oder zu befreienden Bereich und anschließend ganz oder teilweise zurück zur Blattwurzel geführt wird, wobei die Vorlauftemperatur und eine Rücklauftemperatur des zurückgeführten Luftstroms kontinuierlich oder in zeitlichen Abständen erfasst werden. Die Erfindung betrifft weiter ein Computerprogramm, welches eine Steuereinheit einer Windenergieanlage veranlasst, ein entsprechendes Verfahren zum Enteisen eines Rotorblatts einer Windenergieanlage auszuführen, ein Enteisungssystem einer Windenergieanlage sowie eine Windenergieanlage.

Bei dem Betrieb von Windenergieanlagen gibt es an kalten Orten das Problem, dass die Rotorblätter vereisen, was die Aerodynamik und damit den Wirkungsgrad der Rotorblätter verschlechtert, zu unerwünschten Belastungsproblemen führt und die Gefahr eines Eisfalles birgt. Aus diesem Grund sind Systeme entwickelt worden, mittels derer die Rotorblätter erwärmt werden können, um eine Enteisung vorzusehen.

DE 10 2010 030 472 A1 offenbart ein Rotorblatt einer Windenergieanlage mit einem ersten und einem zweiten innen im Rotorblatt verlaufenden Kanal zum Durchleiten eines Luftstrom. Es ist ferner ein Verfahren zum Enteisen eines Rotorblattes einer Windenergieanlage angegeben. Das Rotorblatt gemäß der DE 10 2010 030 472 A1 weist eine Trennvorrichtung auf, die die Kanäle voneinander trennt, so dass der erste Kanal an einer ersten Seite der Trennvorrichtung zur Druckseite des Rotorblattes angeordnet ist und der zweite Kanal an einer zweiten Seite der Trennvorrichtung zur Saugseite des Rotorblattes angeordnet ist. Das beschriebene Verfahren sieht vor, dass die Strömungsgeschwindigkeit des in dem ersten und in dem zweiten Kanal vorgesehenen Luftstroms wenigstens in Abschnitten des Rotorblattes vorgegeben wird. WO2013107457 offenbart ein Verfahren zum Enteisen eines Rotorblatts wobei bei einem Eisbesatz in einem von Eis freizuhaltenden oder zu befreienden Bereich des Rotorblatts ein Enteisungsvorgang gestartet wird. Ferner sind aus DE 10 2013 211 520 A1 ein Rotorblatt, ein Enteisungssystem und ein Verfahren zum Enteisen eines Rotorblatts einer Windenergieanlage bekannt, bei dem ein erwärmter Luftstrom von einer Blattwurzel des Rotorblattes in Richtung einer Blattspitze in einem wärmeisolierten Kanal, der an einem Steg angeordnet ist, geführt wird, wobei der Steg einen ersten Bereich des Rotorblattes umfassend eine Rotorblattnase zu einem zweiten Bereich umfassend eine Rotorblatthinterkante abgrenzt, wobei der erwärmte Luftstrom wenigstens teilweise auf dem Weg zur Blattspitze aus dem Kanal abgezweigt wird und in Richtung der Rotorblattnase geführt wird, und anschließend der abgezweigte Luftstrom in einem Hohlraum, der zwischen der Rotorblattnase und dem Steg sowie dem Kanal vorgesehen ist, zurück zur Blattwurzel geführt wird. Damit wird das grundsätzliche Problem von Warmluftsystemen gelöst, dass ein signifikanter Anteil der Wärmeenergie im blattwurzelnahen Bereich verlorengeht und dadurch eine Enteisung im Blattaußenbereich, insbesondere im Blattspitzenbereich, nur mit einem sehr hohen Energieaufwand und Massenströmen ermöglicht ist. Durch Vorsehen eines wärmeisolierten Kanals kann die warme Luft ohne große Wärmeverluste sehr weit in Richtung der Blattspitze gefördert werden. Zudem ist eine Anordnung des wärmeisolierten Kanals an dem Steg, insbesondere dem Steg, der zur Rotorblattnase angeordnet ist, für kurze Wege des Luftstromes von dem Kanal zu der Innenwand der Rotorblattnase förderlich.

Demgegenüber liegt die der vorliegenden Erfindung zugrunde liegende Aufgabe darin, die Enteisung von Rotorblättern noch effizienter als bislang möglich zu gestalten.

Diese Aufgabe wird durch ein Verfahren zum Enteisen eines Rotorblatts einer Windenergieanlage gelöst, wobei bei einem Eisbesatz in einem von Eis freizuhaltenden oder zu befreienden Bereich des Rotorblatts ein Enteisungsvorgang gestartet wird, in dem ein Luftstrom auf eine vorgegebene oder vorgebbare Vorlauftemperatur erwärmt und von einer Blattwurzel des Rotorblatts aus durch einen Kanal oder ein Kanalsystem im Rotorblatt in den von Eis freizuhaltenden oder zu befreienden Bereich und anschließend ganz oder teilweise zurück zur Blattwurzel geführt wird, wobei die Vorlauftemperatur und eine Rücklauftemperatur des zurückgeführten Luftstroms kontinuierlich oder in zeitlichen Abständen erfasst werden, das dadurch weitergebildet ist, dass während des Enteisungsvorgangs wenigstens ein zeitlicher Verlauf wenigstens eines die Rücklauftemperatur enthaltenden Messsignals auf eine Enteisungsvollendungssignatur hin ausgewertet wird, die von einer Vervollständigung der Enteisung des von Eis freizuhaltenden oder zu befreienden Bereichs verursacht wird.

Die vorliegende Erfindung beruht auf dem Grundgedanken, dass, anders als bislang üblich, der Fortschritt des Enteisungsvorgangs vom tatsächlichen Enteisungsgeschehen abhängig gemacht wird. Da die Enteisung von Rotorblättern einer Windenergieanlage sicherheitsrelevant ist, muss sie vollendet sein, bevor die Zufuhr erwärmter Luft zum zu enteisenden Bereich gestoppt wird. Dies bedeutet, dass sichergestellt sein muss, dass der zu enteisende Bereich komplett eisfrei ist. Da es bislang keine äußeren Sensoren gibt, die diese Beobachtung einfach und zuverlässig leisten können, ist die übliche Vorgehensweise diejenige, dass die Dauer der Zufuhr erwärmter Luft so lang festgelegt wird, dass eine vollständige Enteisung garantiert ist. Die eingestellte Enteisungsdauer ist daher unabhängig von der tatsächlich benötigten Dauer, die im Einzelfall variieren kann, je nach Außentemperatur, Luftfeuchtigkeit und Stärke des Eisbesatzes. Die Menge der verbrauchten Warmluft ist daher in vielen Fällen deutlich größer als die tatsächlich benötigte Menge, was das bisher verwendete Verfahren ineffizient macht. Wenn die Enteisung beendet oder zumindest die Vorlauftemperatur bis zum Ende hin verringert wird, wird Energie und Zeit eingespart und der Enteisungsvorgang effizienter gemacht.

Üblicherweise wird bei den Enteisungssystemen im Windenergiesektor nur die Vorlauftemperatur erfasst und überwacht, um sicher zu stellen, dass der Vorlauf unterhalb des für das Material des Rotorblattes kritischen Temperaturbereichs bleibt.

Eine Erfassung der Rücklauftemperatur, d.h. der Temperatur des aus dem Rotorblatt zurückgeführten Luftstroms, bevor er erneut der Heizeinrichtung zugeführt wird, ist jedoch mit geringem Aufwand möglich. Gerade die Rücklauftemperatur enthält eine verwertbare Information über das Enteisungsgeschehen, denn sie ist abhängig von der tatsächlich aus dem erwärmten Luftstrom entnommenen Wärmemenge. Um wirksam zu sein, verläuft der Luftkanal bzw. das Kanalsystem im zu enteisenden Bereich ohne eigene Isolation vergleichsweise dicht unterhalb der Blattoberfläche. Die aus dem erwärmten Luftstrom austretende Wärme bzw. Wärmeenergie durchdringt die zwischen dem Luftkanal und der Blattoberfläche liegende Materialschicht des Rotorblatts als Wärmestrom und wird von dem an der Blattoberfläche anhaftenden Eis aufgenommen. Die Stärke des Wärmestroms hängt, abgesehen von der Wärmeleitfähigkeit und der räumlichen Anordnung des dazwischen liegenden Rotorblattmaterials, vor allem von der Temperaturdifferenz zwischen dem Luftstrom einerseits und der Blattoberfläche andererseits ab.

Sobald eine Grenzschicht des Eises an der Blattoberfläche den Phasenübergang von fest nach flüssig beginnt, liegt die Temperatur an der Blattoberfläche bei 0 (Null) °C. Diese Oberflächentemperatur ist konstant, solange der zu enteisende Bereich großflächig mit Eis bedeckt ist, zumal Eis ein guter Wärmeisolator ist.

Es hängt von der Stärke des Eisbesatzes ab, ob größere Eisstücke vom Rotorblatt herabfallen oder kleinere "Eistropfen" schmelzen. Erstere werden nicht vollständig aufgetaut, sondern es genügt, dass ihre rotorblattoberflächennahe Schicht flüssig wird, so dass sie abrutschen und zu Boden fallen. Kleinere Eistropfen, die an sich bereits eine kleinere Gefahr für den Betrieb der Windenergieanlage darstellen, werden bei der entsprechenden Wärmezufuhr bereits geschmolzen sein.

Mit der Befreiung der Rotorblattoberfläche vom anhaftenden Eis verbleibt zunächst noch eine dünne Flüssigkeitsschicht, die allerdings schnell durch die aus dem Rotorblatt dringende Wärme verflüchtigt wird, so dass die an der Oberfläche anliegende Temperatur nach kurzer Zeit die Lufttemperatur der Umgebungsluft ist. Diese wird in vielen Fällen mehrere Grade unter 0 °C sein, so dass sich die Temperaturdifferenz zwischen der Temperatur des erwärmten Luftstroms einerseits und der Temperatur an der Rotorblattoberfläche vergrößert. Im Idealfall eines erreichten thermischen Gleichgewichts im Rotorblatt und dem Enteisungsluftstrom wird der Wärmestrom durch das Rotorblattmaterial dadurch größer und die Rücklauftemperatur sinkt aufgrund der Vergrößerung der entnommenen Wärmemenge. Die Entwicklung der Rücklauftemperatur des Luftstroms ist daher ein guter Indikator für die Vollendung der Enteisung.

Vorzugsweise wird der Enteisungsvorgang nach Erkennen einer Enteisungsvollendungssignatur beendet. Diese Maßnahme verkürzt den Enteisungsvorgang und spart Heizenergie. Durch die Verkürzung des Enteisungsvorgangs kann die Windenergieanlage früher als bisher nach einer Vereisung wieder in Betrieb genommen werden und somit mehr elektrischen Strom produzieren. Alternativ kann für eine vorbestimmte oder vorbestimmbare Nachlaufdauer der erwärmte Luftstrom weiter betrieben werden, gegebenenfalls mit einer reduzierten Vorlauftemperatur. So wird auch bei dem erfindungsgemäßen Enteisungsverfahren eine Sicherheitsreserve für die vollständige Enteisung zur Verfügung gestellt.

Im Betrieb der Windenergieanlage können sich mehrere Effekte überlagern, die das Temperatursignal modifizieren. So ist es möglich, dass sich noch kein thermisches Gleichgewicht im Rotorblattmaterial im zu enteisenden Bereich herausgebildet hat, bevor die Enteisung vollendet ist. In diesem Fall kann es sein, dass der Eisabfall zu einem relativ frühen Zeitpunkt erfolgt, an dem das Rotorblattmaterial sich noch erwärmt. Diese Phase geht mit einem zu Beginn steilen und später abflachenden Anstieg der Rücklauftemperatur einher. Die Enteisungsvollendungssignatur ist in einem solchen Fall nicht notwendigerweise die Verringerung der Rücklauftemperatur selber, wie oben für den idealen Fall beschrieben, sondern eine stärkere Verringerung des Anstiegs der Rücklauftemperatur.

Vor diesem Hintergrund ist ein die Rücklauftemperatur enthaltendes Messsignal vorteilhafterweise die Rücklauftemperatur selbst, eine Differenztemperatur zwischen Vorlauftemperatur und Rücklauftemperatur oder eine erste oder zweite zeitliche Ableitung der Rücklauftemperatur oder der Differenztemperatur zwischen Vorlauftemperatur und Rücklauftemperatur. Es können im Rahmen der vorliegenden Erfindung vorteilhafterweise auch mehrere dieser Messsignale, die aus der Rücklauftemperatur und gegebenenfalls zusätzlich aus der Vorlauftemperatur des erwärmten Luftstroms gebildet werden, verwendet werden. Auf diese Weise ist es möglich, aufgrund einer größeren Redundanz der Auswertung einerseits eine größere Sicherheit der Erkennung von Enteisungsvollendungssignaturen zu erlangen und andererseits auch schwächere Enteisungsvollendungssignaturen zu erkennen.

Ebenfalls vorteilhafterweise ist die Enteisungsvollendungssignatur ein Überschreiten oder Unterschreiten eines Schwellwerts oder eine im Vergleich zur Trägheit der Veränderung des die Rücklauftemperatur enthaltenden Temperatursignals kurzfristige Änderung der ersten und/oder zweiten zeitlichen Ableitung der Rücklauftemperatur oder der Temperaturdifferenz zwischen Vorlauftemperatur und Rücklauftemperatur. Es können im Rahmen der vorliegenden Erfindung auch mehrere dieser Enteisungsvollendungssignaturen verwendet werden. Beispielsweise wird sich eine stärkere Verringerung des Anstiegs der Rücklauftemperatur aufgrund eines Eisabfalls in der ersten und/oder zweiten zeitlichen Ableitung der Rücklauftemperatur zeigen. Die Differenz zwischen Vorlauftemperatur und Rücklauftemperatur eliminiert außerdem Effekte, die in erster Linie in der Anlaufphase während der Erwärmung des Luftstroms bis zum Erreichen der vorbestimmten Vorlauftemperatur auftreten und andererseits bei Schwankungen der Vorlauftemperatur während des weiteren Enteisungsvorgangs auftreten können und eine Enteisungsvollendungssignatur vortäuschen würden. Bei Kenntnis typischer Enteisungsvorgänge und Verläufe von Rücklauftemperaturen genügen in vielen Fällen auch Grenz- oder Schwellwerte, deren Über- oder Unterschreiten als Enteisungsvollendungssignatur ausreicht.

Eine weitere vorteilhafte Maßnahme besteht darin, die Erkennung von Enteisungsvollendungssignaturen erst nach Erreichen der vorbestimmten oder vorbestimmbaren Vorlauftemperatur zu starten.

Vorzugsweise werden Umweltfaktoren, insbesondere Außentemperatur, Luftfeuchte, Windgeschwindigkeit und/oder Sonneneinstrahlung, bei einer Bestimmung von Schwellwerten oder anderen Indikatoren für eine Enteisungsvollendungssignatur berücksichtigt. So wird beispielsweise eine Sonneneinstrahlung die Rotorblattoberfläche erwärmen, was zu einer Reduktion des Wärmeflusses durch das Rotorblatt führt. Die Außentemperatur ist bei trockenem Rotorblatt direkt für die Temperaturdifferenz zwischen Rotorblattoberfläche und Luftstrom verantwortlich, bei feuchtem Rotorblatt indirekt. Luftfeuchtigkeit und Windgeschwindigkeit fließen unter anderem in die Geschwindigkeit ein, mit der das Rotorblatt nach seiner Befreiung vom Eis trocknet, und somit in die zeitliche "Schärfe" oder Bestimmtheit der Enteisungsvollendungssignatur.

Die Sonneneinstrahlung kann beispielsweise aus den Bildern ohnehin häufig vorhandener Außenkameras berechnet werden, deren Bildhelligkeit und Einstellungsparameter wie Blendenöffnung, Verstärkungsfaktor usw. bekannt sind. Ebenso kann aus der bekannten Position der Windenergieanlage sowie der aus Datum und Uhrzeit bekannten Position der Sonne am Himmel die Einstrahlstärke berechnet werden.

Alternativ kann auch das Signal von an der Windenergieanlage oder im Windpark angeordneten Lichtintensitätssensoren ausgewertet werden. Derartige Sensoren sind im Stand der Technik, insbesondere zur Anwendung in Steuerungen zur Verhinderung von Schattenwurf bei Windenergieanlagen, bereits umfassend bekannt.

Ebenfalls vorteilhaft ist es, wenn in einem Enteisungstestlauf oder mehreren Enteisungstestläufen mit und/oder ohne Eisbesatz am Rotorblatt ein oder mehrere typische zeitliche Verläufe eines oder mehrerer die Rücklauftemperatur enthaltender Messsignale erfasst wird oder werden und/oder zur Erzeugung eines Referenzmodells verwendet werden, in dem insbesondere noch Umweltfaktoren parametrisiert werden, und der oder die typischen Verläufe und/oder das Referenzmodell in nachfolgenden Enteisungsvorgängen als Vergleichsreferenz zur Ermittlung von Enteisungsvollendungssignaturen verwendet wird oder werden. Um die Testdaten möglichst neutral zu halten, können diese beispielsweise des Nachts genommen werden, so dass Sonneneinstrahlung nicht auftritt und die Temperatur nur von der Lufttemperatur bestimmt wird. Faktoren wie Sonneneinstrahlung werden dann durch Skalierung oder Verschiebung der Vergleichsdaten oder der Messdaten separat berücksichtigt. Diese Anpassungen folgen bekannten physikalischen Überlegungen oder können durch tagsüber oder unter verschiedenen Bedingungen genommene Testreihen ergänzt werden.

Vorzugsweise ist eine Mindestenteisungsdauer vorbestimmt oder vorbestimmbar, die die minimale Dauer des Enteisungsvorgangs auch für den Fall vorgibt, dass vor Ablauf der Mindestenteisungsdauer eine Enteisungsvollendungssignatur erkannt wird. Alternativ oder zusätzlich hierzu ist vorteilhafterweise eine maximale Enteisungsdauer vorbestimmt oder vorbestimmbar, nach deren Ablauf der Enteisungsvorgang auch ohne Auftreten einer Enteisungsvollendungssignatur beendet wird.

Eine vorteilhafte Verbesserung und Erweiterung erfährt das erfindungsgemäße Verfahren, wenn ein geschlossener Luftstromkreislauf vorgesehen ist und die Heizleistung zum Erreichen der Vorlauftemperatur zusätzlich überwacht wird. Da die benötigte Heizleistung von der Temperatur des Rücklaufs abhängt, ist somit eine unabhängige zweite Messung gegeben, die gegebenenfalls auch bei Ausfall des Temperatursensors für die Rücklauftemperatur noch verwertbare Messergebnisse liefert.

Die Analyse der Temperaturverläufe wird vorzugsweise unter Berücksichtigung geeigneter Toleranzen für die Messungenauigkeiten und Schwankungen in der Temperaturmessung durchgeführt, damit nicht aufgrund falscher Enteisungsvollendungssignaturen die Enteisung vorzeitig gestoppt wird. Die zeitlichen Abstände zwischen aufeinanderfolgenden Temperaturmessungen sind vorzugsweise geringer als die Länge von bekannten oder verwendeten Enteisungsvollendungssignaturen, so dass letztere nicht durch das Messraster fallen. Die Messhäufigkeit ist vorzugsweise eine Messung pro Minute oder mehr, insbesondere eine Messung pro 10 Sekunden oder mehr.

Die der Erfindung zugrunde liegende Aufgabe wird auch durch ein Enteisungssystem einer Windenergieanlage mit wenigstens einem Rotorblatt, das einen Kanal oder ein Kanalsystem zur Durchführung eines erwärmten Luftstroms aufweist, einer Heizvorrichtung zur Erzeugung eines erwärmten Luftstroms, wenigstens einem Temperatursensor im Vorlauf des erwärmten Luftstroms und einem Temperatursensor im Rücklauf des erwärmten Luftstroms, gelöst, das weiter eine Steuervorrichtung umfasst, die zur Steuerung der Heizvorrichtung ausgebildet ist und mit den Temperatursensoren im Vorlauf und Rücklauf des erwärmten Luftstroms verbunden ist und ausgebildet und eingerichtet ist, ein zuvor beschriebenes erfindungsgemäßes Verfahren auszuführen. Eine solche Steuervorrichtung ist üblicherweise als Datenverarbeitungsanlage ausgebildet, die mittels einer Steuersoftware zur Ausführung des erfindungsgemäßen Verfahrens eingerichtet ist. Hierbei kann es sich um einen Teil der zentralen Steuerung einer Windenergieanlage handeln.

Die der Erfindung zugrunde liegende Aufgabe wird ferner gelöst durch ein Computerprogramm, welches eine Steuervorrichtung einer Windenergieanlage veranlasst, ein zuvor beschriebenes erfindungsgemäßes Verfahren zum Enteisen eines Rotorblatts einer Windenergieanlage auszuführen. Dieses erfindungsgemäße Computerprogramm ist die oben genannte Steuersoftware.

Die der Erfindung zugrunde liegende Aufgabe wird auch gelöst durch eine Windenergieanlage mit einem erfindungsgemäßen Enteisungssystem.

Die zu dem erfindungsgemäßen Verfahren beschriebenen Merkmale, Vorteil und Eigenschaften sind auch im erfindungsgemäßen Enteisungssystem und der erfindungsgemäßen Windenergieanlage verwirklicht.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine Messreihe von Vorlauf- und Rücklauftemperatur sowie eine zeitliche Veränderung der Rücklauftemperatur für einen typischen Enteisungsvorgang,
- Fig. 2: eine schematische Darstellung eines Verlaufs mit einer Enteisungsvollendungssignatur und
- Fig. 3: eine schematische Darstellung eines weiteren Verlaufs mit einer Enteisungsvollendungssignatur.

In den Zeichnungen sind jeweils gleiche oder gleichartige Elemente und/oder Teile mit denselben Bezugsziffern versehen, so dass von einer erneuten Vorstellung jeweils abgesehen wird.

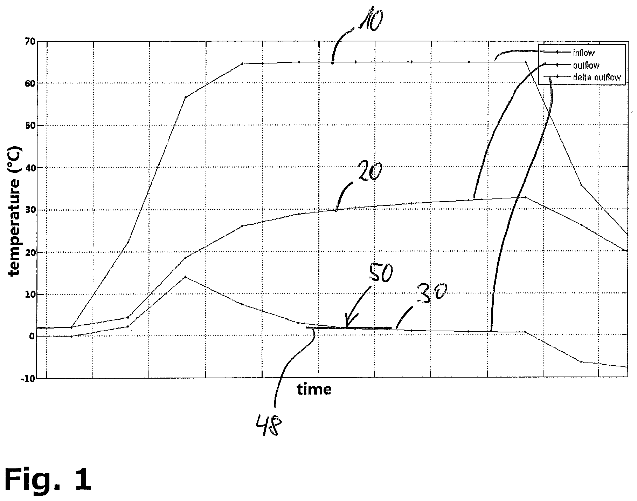

Fig. 1 zeigt eine Messreihe von Vorlauftemperatur 10 und Rücklauftemperatur 20 sowie eine zeitliche Veränderung 30 der Rücklauftemperatur 20 für einen typischen Enteisungsvorgang für ein vereistes Rotorblatt einer Windenergieanlage. Entsprechende Enteisungssysteme, Rotorblätter und Heizluftkanalsysteme sind beispielsweise DE 10 2010 030 472 A1 oder DE 10 2013 211 520 A1 zu entnehmen. Die Zeitskala auf der horizontalen Achse beträgt zehn (10) Minuten für jede Unterteilung. Auch die über jeweils zehn Minuten gemittelten Messwerte sind in Abständen von zehn Minuten aufgezeichnet. Die oberste Kurve zeigt den Verlauf der Vorlauftemperatur 10, die nach dem Start des Enteisungsvorgangs in etwa dreißig (30) Minuten ihre vorbestimmte Vorlauftemperatur von ca. 65 °C erreicht und danach für ca. fünfzig (50) Minuten konstant bleibt, bis zum Abschluss des Enteisungsvorgangs.

Die mittlere Kurve zeigt die Rücklauftemperatur 20, die zunächst mit der Vorlauftemperatur 10 stark ansteigt und nach Erreichen der maximalen Vorlauftemperatur 10 abflacht. Sie steigt allerdings während des ganzen Enteisungsvorgangs weiter an. Die untere Kurve mit dem Bezugszeichen 30 stellt die Differenz der aufeinanderfolgenden Messwerte der Rücklauftemperatur 20 dar, also ein Maß für die erste zeitliche Ableitung 30 des zeitlichen Verlaufs der Rücklauftemperatur 20. Nach Erreichen eines Maximums kurz vor Erreichen der maximalen Vorlauftemperatur 10 sinkt sie ab, im Verlauf der Enteisung bis auf wenige Grad pro 10 Minuten. Eine optische Kontrolle am Ende des Enteisungsvorgangs bestätigt die vollständige Enteisung der Rotorblattspitze.

Bereits an diesem Verlauf kann als Enteisungsvollendungskriterium 50 ein beispielsweise aus Erfahrungswerten ermittelter Schwellwert 48 verwendet werden, beispielsweise das Überschreiten des Werts von 30 °C der Rücklauftemperatur 20, das Unterschreiten einer Differenz von 35 °C zwischen Vorlauftemperatur 10 und Rücklauftemperatur 20 oder eines Schwellwerts 48 von 1 °C pro 10 Minuten in der zeitlichen Differenz aufeinander folgender Werte, also der ersten zeitlichen Ableitung 30, der Rücklauftemperatur 20.

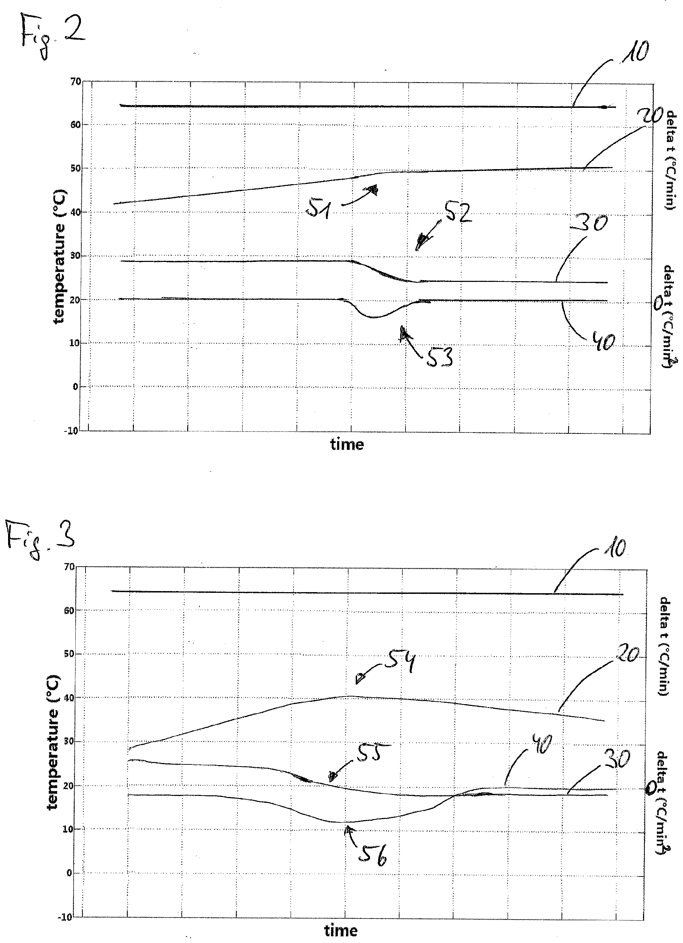

Fig. 2 stellt einen Ausschnitt aus einem typischen Enteisungsvorgang dar, in dem die Vorlauftemperatur 10 bereits ihren maximalen Wert erreicht hat. Die Einheit der horizontalen Zeitachse ist willkürlich. Die Rücklauftemperatur 20 steigt in diesem System zunächst noch vergleichsweise steil an, da ein zu enteisender Bereich des Rotorblatts noch von die Wärme zurückhaltendem Eis besetzt ist. Nach Entfernung der Eisschicht flacht der Anstieg der Rücklauftemperatur 20 ab, da die Wärme nun ungehindert in die kältere Umgebung abstrahlen kann und daher ein höherer Wärmefluss durch das Rotorblattmaterial erfolgt. Die höhere Rücklauftemperatur 20 gegenüber dem Beispiel aus Fig. 1 ist der Übersichtlichkeit der Darstellung geschuldet, sie ist rein beispielhaft zu verstehen. Die Stelle, an der der steilere Anstieg der Rücklauftemperatur 20 in den flacheren Anstieg übergeht, ist als Enteisungsvollendungssignatur 51 gekennzeichnet.

Im unteren Bereich der Fig. 2 sind die erste Ableitung 30 und die zweite Ableitung 40 der Rücklauftemperatur 20 eingezeichnet. Diese haben jeweils die Einheiten °C/min bzw. °C/min², wie dies auf der rechts abgebildeten vertikalen Achse gezeigt ist. Die Einheiten sind willkürlich, lediglich eine Nulllinie ist gekennzeichnet. Die erste Ableitung 30 der Rücklauftemperatur 20 ist durchweg positiv, nimmt jedoch zum Zeitpunkt der Vollendung der Enteisung ab, wodurch sich eine Enteisungsvollendungssignatur 52 ergibt.

Die zweite Ableitung 40 ist in diesem Ausführungsbeispiel konstant Null (0), lediglich im Zeitpunkt der Vollendung der Enteisung wird sie deutlich negativ, entsprechend der Abnahme des Wertes in der ersten Ableitung 30. Dies ergibt eine weitere Enteisungsvollendungssignatur 53.

Für die in Fig. 2 dargestellte Analyse ist eine engmaschigere Messung der Temperaturen von Vorlauf und Rücklauf notwendig als dies in Fig. 1 gezeigt ist. Obwohl das Enteisungssystem einer Windenergieanlage ein träges System ist, zeigen sich Veränderungen doch im zeitlichen Bereich weniger Minuten. Um diese erfassen zu können, ist eine Messwiederholrate von einer Messung pro Minute oder mehr, etwa einer Messung pro halber Minute oder pro zehn Sekunden, sinnvoll. Die zeitlichen Messabstände müssen kleiner sein als die Dauer einer Enteisungsvollendungssignatur 50, 51, 52 oder 53.

In Fig. 3 ist ein weiteres Ausführungsbeispiel dargestellt, in dem wiederum die Vorlauftemperatur 10 bereits konstant auf ihrem Maximum angekommen ist. Im Unterschied zum Ausführungsbeispiel gemäß Fig. 2 sinkt die Rücklauftemperatur 20 in Fig. 3 nach der Vollendung der Enteisung ab. Der Übergang von der steigenden zur fallenden Flanke der Kurve der Rücklauftemperatur 20 bildet eine Enteisungsvollendungssignatur 54. Die erste Ableitung 30 wechselt in diesem Fall vom Positiven ins Negative. Der Nulldurchgang kann in diesem Fall als Enteisungsvollendungssignatur 55 dienen. Da der Anstieg der Rücklauftemperatur 20 in der ersten Hälfte der dargestellten Messperiode nicht konstant ist, sondern abflacht, ist die zweite Ableitung 40 zunächst negativ, nimmt dann ein Minimum (oder negatives Maximum) an, um danach auf Null (0) zu kommen. Das Minimum bzw. die negative Kurve der zweiten Ableitung 40 bildet eine Enteisungsvollendungssignatur 56.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Im Rahmen der Erfindung sind Merkmale, die mit "insbesondere" oder "vorzugsweise" gekennzeichnet sind, als fakultative Merkmale zu verstehen.

### Bezugszeichenliste

- 10: Vorlauftemperatur
- 20: Rücklauftemperatur
- 30: zeitliche Änderung der Rücklauftemperatur (erste zeitliche Ableitung)
- 40: zweite zeitliche Ableitung der Rücklauftemperatur
- 48: Schwellwert
- 50 - 56: Enteisungsvollendungssignatur

## Patentansprüche

1. Verfahren zum Enteisen eines Rotorblatts einer Windenergieanlage, wobei bei einem Eisbesatz in einem von Eis freizuhaltenden oder zu befreienden Bereich des Rotorblatts ein Enteisungsvorgang gestartet wird, in dem ein Luftstrom auf eine vorgegebene oder vorgebbare Vorlauftemperatur (10) erwärmt und von einer Blattwurzel des Rotorblatts aus durch einen Kanal oder ein Kanalsystem im Rotorblatt in den von Eis freizuhaltenden oder zu befreienden Bereich und anschließend ganz oder teilweise zurück zur Blattwurzel geführt wird, wobei die Vorlauftemperatur (10) und eine Rücklauftemperatur (20) des zurückgeführten Luftstroms kontinuierlich oder in zeitlichen Abständen erfasst werden, **dadurch gekennzeichnet, dass** während des Enteisungsvorgangs wenigstens ein zeitlicher Verlauf wenigstens eines die Rücklauftemperatur (20) enthaltenden Messsignals auf eine Enteisungsvollendungssignatur (50 - 56) hin ausgewertet wird, die von einer Vervollständigung der Enteisung des von Eis freizuhaltenden oder zu befreienden Bereichs verursacht wird.

2. Verfahren nach Anspruch 1, **dadurch gekennzeichnet, dass** der Enteisungsvorgang nach Erkennen einer Enteisungsvollendungssignatur (50 - 56) beendet wird oder der erwärmte Luftstrom für eine vorbestimmte oder vorbestimmbare Nachlaufdauer weiter betrieben wird, insbesondere mit einer reduzierten Vorlauftemperatur (10).

3. Verfahren nach Anspruch 1 oder 2, **dadurch gekennzeichnet, dass** wenigstens ein die Rücklauftemperatur (20) enthaltendes Messsignal die Rücklauftemperatur (20) selbst, eine Differenztemperatur zwischen Vorlauftemperatur (10) und Rücklauftemperatur (20) oder eine erste (30) oder zweite zeitliche Ableitung (40) der Rücklauftemperatur (20) oder der Differenztemperatur zwischen Vorlauftemperatur (10) und Rücklauftemperatur (20) ist.

4. Verfahren nach einem der Ansprüche 1 bis 3, **dadurch gekennzeichnet, dass** die Enteisungsvollendungssignatur (50 - 56) ein Überschreiten oder Unterschreiten eines Schwellwerts (48) oder eine im Vergleich zur Trägheit der Veränderung des die Rücklauftemperatur (20) enthaltenden Temperatursignals kurzfristige Änderung der ersten (30) und/oder zweiten zeitlichen Ableitung (40) der Rücklauftemperatur (20) oder der Temperaturdifferenz zwischen Vorlauftemperatur (10) und Rücklauftemperatur (20) ist.

5. Verfahren nach einem der Ansprüche 1 bis, 4, **dadurch gekennzeichnet, dass** die Erkennung von Enteisungsvollendungssignaturen (50 - 56) erst nach Erreichen der vorbestimmten oder vorbestimmbaren Vorlauftemperatur (10) gestartet wird.

6. Verfahren nach einem der Ansprüche 1 bis 5, **dadurch gekennzeichnet, dass** Umweltfaktoren, insbesondere Außentemperatur, Luftfeuchte, Windgeschwindigkeit und/oder Sonneneinstrahlung, bei einer Bestimmung von Schwellwerten (48) oder anderen Indikatoren für eine Enteisungsvollendungssignatur (50 - 56) berücksichtigt werden.

7. Verfahren nach einem der Ansprüche 1 bis 6, **dadurch gekennzeichnet, dass** in einem Enteisungstestlauf oder mehreren Enteisungstestläufen mit und/oder ohne Eisbesatz am Rotorblatt ein oder mehrere typische zeitliche Verläufe eines oder mehrerer die Rücklauftemperatur (20) enthaltender Messsignale erfasst wird oder werden und/oder zur Erzeugung eines Referenzmodells verwendet werden, in dem insbesondere noch Umweltfaktoren parametrisiert werden, und der oder die typischen Verläufe und/oder das Referenzmodell in nachfolgenden Enteisungsvorgängen als Vergleichsreferenz zur Ermittlung von Enteisungsvollendungssignaturen (50 - 56) verwendet wird oder werden.

8. Verfahren nach einem der Ansprüche 1 bis 7, **dadurch gekennzeichnet, dass** eine Mindestenteisungsdauer vorbestimmt oder vorbestimmbar ist, die die minimale Dauer des Enteisungsvorgangs auch für den Fall vorgibt, dass vor Ablauf der Mindestenteisungsdauer eine Enteisungsvollendungssignatur (50 - 56) erkannt wird.

9. Verfahren nach einem der Ansprüche 1 bis 8, **dadurch gekennzeichnet, dass** eine maximale Enteisungsdauer vorbestimmt oder vorbestimmbar ist, nach deren Ablauf der Enteisungsvorgang auch ohne Auftreten einer Enteisungsvollendungssignatur (50 - 56) beendet wird.

10. Verfahren nach einem der Ansprüche 1 bis 9, **dadurch gekennzeichnet, dass** ein geschlossener Luftstromkreislauf vorgesehen ist und die Heizleistung zum Erreichen der Vorlauftemperatur (10) zusätzlich überwacht wird.

11. Enteisungssystem einer Windenergieanlage mit wenigstens einem Rotorblatt, das einen Kanal oder ein Kanalsystem zur Durchführung eines erwärmten Luftstroms aufweist, einer Heizvorrichtung zur Erzeugung eines erwärmten Luftstroms, wenigstens einem Temperatursensor im Vorlauf des erwärmten Luftstroms und einem Temperatursensor im Rücklauf des erwärmten Luftstroms, weiter umfassend eine Steuervorrichtung, die zur Steuerung der Heizvorrichtung ausgebildet ist und mit den Temperatursensoren im Vorlauf und Rücklauf des erwärmten Luftstroms verbunden ist und ausgebildet und eingerichtet ist, ein Verfahren nach einem der Ansprüche 1 bis 10 auszuführen.

12. Computerprogramm, welches eine Steuervorrichtung einer Windenergieanlage veranlasst, ein Verfahren gemäß einem der Ansprüche 1 bis 10 zum Enteisen eines Rotorblatts einer Windenergieanlage auszuführen.

13. Windenergieanlage mit einem Enteisungssystem nach Anspruch 11.

## Claims

1. A method for de-icing a rotor blade of a wind turbine, wherein a de-icing procedure is started in the event of icing in an area of the rotor blade to be kept free of or to be freed from ice, in which an air stream is heated to a predetermined or predeterminable flow temperature (10) and is guided from a blade root of the rotor blade through a channel or a channel system in the rotor blade into the area to be kept free of or to be freed from ice and subsequently entirely or partially back to the blade root, wherein the flow temperature (10) and a return temperature (20) of the returned air stream are captured continuously or at time intervals, **characterized in that**, during the de-icing procedure, at least one temporal progression of at least one measurement signal containing the return temperature (20) is evaluated for a de-icing completion signature (50 - 56), which is caused by a completion of the de-icing of the area to be kept free of or to be freed from ice.

2. The method according to Claim 1, **characterized in that** the de-icing procedure is ended following the detection of a de-icing completion signature (50 - 56), or the heated air stream can continue to be used for a predetermined or predeterminable rundown period, in particular with a reduced flow temperature (10).

3. The method according to Claim 1 or 2, **characterized in that** at least one measurement signal containing the return temperature (20) is the return temperature (20) itself, a temperature difference between the flow temperature (10) and the return temperature (20) or a first (30) or second temporal derivative (40) of the return temperature (20) or of the temperature difference between the flow temperature (10) and the return temperature (20).

4. The method according to any one of Claims 1 to 3, **characterized in that** the de-icing completion signature (50 - 56) is an exceeding or a falling below of a threshold value (48) or a rapid change in the first (30) and/or second temporal derivative (40) of the return temperature (20) or temperature difference between the flow temperature (10) and the return temperature (20) compared to the slowness of the change in the temperature signal containing the return temperature (20).

5. The method according to any one of Claims 1 to 4, **characterized in that** the detection of de-icing completion signatures (50 - 56) is only started after the predetermined or predeterminable flow temperature (10) is reached.

6. The method according to any one of Claims 1 to 5, **characterized in that** environmental factors, in particular outside temperature, air humidity, wind speed and/or solar irradiation, are taken into consideration in the determination of threshold values (48) or other indicators for a de-icing completion signature (50 - 56).

7. The method according to any one of Claims 1 to 6, **characterized in that** one or more typical temporal progressions of one or more measurement signals containing the return temperature (20) is or are captured in a de-icing test run or multiple de-icing test runs with and/or without icing on the rotor blade and/or are used to generate a reference model, in which in particular environmental factors are furthermore parameterized, and the typical progression(s) and/or the reference model is or are used in subsequent de-icing procedures as a comparative reference for determining de-icing completion signatures (50 - 56).

8. The method according to any one of Claims 1 to 7, **characterized in that** a minimum de-icing duration, which specifies the minimum duration of the de-icing procedure even in the case that a de-icing completion signature (50 - 56) is detected before the expiry of the minimum de-icing duration, is predetermined or predeterminable.

9. The method according to any one of Claims 1 to 8, **characterized in that** a maximum de-icing duration is predetermined or predeterminable, following the expiry of which the de-icing procedure is also ended without the occurrence of a de-icing completion signature (50 - 56).

10. The method according to any one of Claims 1 to 9, **characterized in that** a closed air stream circuit is provided and the heating capacity for achieving the flow temperature (10) is additionally monitored.

11. A de-icing system of a wind turbine having at least one rotor blade, which has a channel or a channel system for conducting a heated air stream, a heating device for generating a heated air stream, at least one temperature sensor in the flow of the heated air stream and a temperature sensor in the return of the heated air stream, further comprising a control device which is designed to control the heating device and is connected with the temperature sensors in the flow and return of the heated air stream and is designed and set up to execute a method according to any one of Claims 1 to 10.

12. A computer program, which causes a control device of a wind turbine to execute a method according to any one of Claims 1 to 10 for de-icing a rotor blade of a wind turbine.

13. A wind turbine having a de-icing system according to Claim 11.

## Revendications

1. Procédé de dégivrage d'une pale de rotor d'une éolienne, dans lequel une opération de dégivrage est démarrée en cas de givrage dans une zone de la pale de rotor devant être maintenue à l'abri du givre ou devant être libérée du givre, un écoulement d'air étant chauffé à une température d'arrivée (10) prédéterminée ou apte à être prédéterminée et est guidé depuis une emplanture de la pale de rotor par un conduit ou un système de conduits dans la pale de rotor jusque dans la zone à garder libre de givre ou devant être dégivrée et est ensuite renvoyé en totalité ou en partie vers l'emplanture de la pale, la température d'arrivée (10) et une température de retour (20) du flux d'air recirculé étant détectées en continu ou par intervalle de temps, **caractérisé en ce qu'**au cours de l'opération de dégivrage, au moins une progression temporelle d'au moins un signal de mesure contenant la température de retour (20) est évalué sur une signature d'achèvement du dégivrage (50-56) qui est générée par un achèvement du dégivrage de la zone devant être maintenue libre de givre ou devant être dégivrée.

2. Procédé selon la revendication 1, **caractérisé en ce que** l'opération de dégivrage est arrêtée après la détection d'une signature d'achèvement du dégivrage (50-56), ou le flux d'air chauffé continue à être utilisé pendant un laps de temps prédéterminé ou apte à être prédéterminé, en particulier avec une température d'arrivée (10) réduite.

3. Procédé selon la revendication 1 ou la revendication 2, dans lequel au moins un signal de mesure qui contient la température de retour (20) est la température de retour (20) elle-même, une différence de température entre la température d'arrivée (10) et la température de retour (20), ou une première (30) ou une deuxième dérivée temporelle (40) de la température de retour (20) ou de la différence de température entre la température d'arrivée (10) et la température de retour (20).

4. Procédé selon l'une des revendications 1 à 3, **caractérisé en ce que** la signature d'achèvement du dégivrage (50-56) est un dépassement, ou un passage en dessous, d'une valeur de seuil (48), ou un changement rapide de la première (30) et/ou deuxième dérivée temporelle (40) de la température de retour (20) ou de la différence de température entre la température d'arrivée (10) et la température de retour (20) par rapport à l'inertie de la modification du signal de température contenant la température de retour (20).

5. Procédé selon l'une des revendications 1 à 4, **caractérisé en ce que** la détection des signatures d'achèvement du dégivrage (50-56) ne démarre qu'après que la température d'arrivée (10) prédéterminée ou apte à être prédéterminée ait été atteinte.

6. Procédé selon l'une des revendications 1 à 5, **caractérisé en ce que** des facteurs environnementaux, en particulier la température extérieure, l'humidité de l'air, la vitesse du vent et/ou l'irradiation solaire, sont pris en considération dans une détermination de la valeur de seuil (48) ou d'autres indicateurs pour une signature d'achèvement du dégivrage (50-56).

7. Procédé selon l'une des revendications 1 à 6, dans lequel une ou plusieurs courbes temporelles typiques d'un ou plusieurs signaux de mesure contenant la température de retour (20) sont enregistrés ou aptes à être enregistrés au cours d'une étape de dégivrage ou de plusieurs étapes de dégivrage avec et/ou sans couverture de givre sur la pale de rotor et/ou sont utilisés pour générer un modèle de référence, des facteurs environnementaux étant en particulier paramétrés, et lesdites une ou plusieurs courbes typiques et/ou le modèle de référence est utilisé ou sont utilisés dans les opérations de dégivrage ultérieures comme référence de comparaison pour déterminer les signature d'achèvement du dégivrage (50-56).

8. Procédé selon l'une des revendications 1 à 7, **caractérisé en ce qu'**une durée minimale de dégivrage est prédéterminée ou apte à être prédéterminée, qui spécifie la durée minimale de l'opération de dégivrage, même dans le cas où une signature d'achèvement du dégivrage (50-56) est détectée avant l'achèvement de la durée minimale de dégivrage.

9. Procédé selon l'une des revendications 1 à 8, **caractérisé en ce qu'**une durée maximale de dégivrage est prédéterminée ou apte à être prédéterminée, après l'achèvement de laquelle le processus de dégivrage est terminé même en l'absence d'une signature d'achèvement de dégivrage (50-56).

10. Procédé selon l'une des revendications 1 à 9, **caractérisé en ce qu'**il est prévu un circuit d'air fermé et la puissance de chauffage pour atteindre la température d'arrivée (10) est en outre surveillée.

11. Système de dégivrage pour une éolienne avec au moins une pale de rotor comprenant un conduit ou un système de conduits pour guider un flux d'air chauffé, un dispositif de chauffage pour produire un flux d'air chauffé, au moins un capteur de température au niveau de l'arrivée du flux d'air chauffé et un capteur de température au niveau du retour du flux d'air chauffé, comprenant en outre un dispositif de commande qui est conçu pour commander le dispositif de chauffage et qui est relié aux capteurs de température dans l'arrivée et le retour du flux d'air chauffé, et conçu et agencé pour mettre en oeuvre un procédé selon l'une des revendications 1 à 10.

12. Un programme informatique qui agit sur un dispositif de commande d'une éolienne de façon à mettre en oeuvre un procédé selon l'une des revendications 1 à 10 pour dégivrer une pale de rotor d'une éolienne.

13. Éolienne avec système de dégivrage selon la revendication 11.
